# EUROPEAN PATENT SPECIFICATION

(11) **EP 3 422 664 B1**
(45) Date of publication and mention of the grant of the patent: **01.04.2020**
(21) Application number: 18178548.6
(22) Date of filing: 19.06.2018
(51) Int. Cl.: H04L 29/06

(54) **METHOD OF BLOCKING DATA COMMUNICATION AND CORRESPONDING APPARATUS**
VERFAHREN ZUR BLOCKIERUNG VON DATENKOMMUNIKATION UND ZUGEHÖRIGE VORRICHTUNG
PROCÉDÉ DE BLOCAGE DE COMMUNICATION DE DONNÉES ET APPAREIL CORRESPONDANT

(30) Priority: 30.06.2017 EP 17305827
(43) Date of publication of application: 02.01.2019
(73) Proprietor: InterDigital CE Patent Holdings, 75017 Paris (FR)
(72) Inventor: LE MERRER, Erwan, 35576 Cesson-Sévigné Cedex (FR); NEUMANN, Christoph, 35576 Cesson-Sévigné Cedex (FR)
(74) Representative: Huchet, Anne

(56) References cited:
- WO-A2-2008/153840
- US-A1- 2011 099 622

## Description

### FIELD

The present disclosure generally relates to the field of preventing and blocking of Distributed Denial of Service (DDoS) attacks. A DDoS attack is a cyber-attack where a vast number of devices connected to the Internet are used to perpetrate a coordinated DoS attack.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Typically, user terminals such as Set Top Boxes (STB), High-Definition Televisions (HDTV) and Internet Protocol telephone sets will connect to a Service Provider (SP) or Internet Service Provider (ISP) through a Local Area Network (LAN) controlled by an Access Point (AP) or GateWay (GW) provided by the service provider. The gateway proposes wireless and wired communication for connecting the LAN devices. The gateway further has a network interface that enables it to be connected to a Wide Area Network (WAN) for connection to the Internet and in particular for connection to a server of the service provider. In a context of deployment of IPTV and/or triple play services (IPTV + IP telephony + Internet), a service provider may have millions of gateways and set-top boxes installed at a similar number of clients. Because of the vast number of set-top box devices with similar operating system and similar application software, these devices may be targeted by malicious software in an attempt to set up a DDoS attack with an intent to disrupt service provision to the clients of the service provider or to any other Internet business for purposes of sabotage, racketeering and extortion. Since the notorious Mirai botnet, it has become clear that a large portion of currently deployed Internet of Things (loT) devices are favorite targets for being infected with malware due to weak (default) passwords and poor security protection. These devices may then join such a botnet, used by criminals for organizing DDoS attacks. These loT devices are generally not supplied by the service provider but use the service provider's gateway for accessing the Internet network. For the service provider, it is desirable to prevent misuse of these devices and in particular of the devices supplied by the service provider, to avoid service disruption or complaints from other entities concerned by a DDoS attack from misused devices in the LAN supplied by the service provider's devices.

WO 2008/153840 discloses methods for tracking anomalous behaviour in a network referred to as a non-zero slack schemes. The non-zero slack schemes reduce the number of communication message in the network necessary to monitor emerging large-scale, distributed systems using distributed computational algorithms by generating more optimal local constraints for each remote site in the system.

US 2011/099622 discloses a DDoS attack detection and response apparatus.

There is thus a need for a solution that improves early detection of misuse of a service provider's devices for preventing or blocking DDoS attacks caused by devices in the LAN supplied by the service provider.

### SUMMARY

According to one aspect of the present disclosure, there is provided a method of blocking data communication from devices in a local area network. The method is implemented by an access point connected to a wide area network and providing the local area network to the devices. The method comprises counting a first total number of requests per device and per destination Internet Protocol address in the wide area network; transmitting an alert message destined to access points in the wide area network if for a device in the local area network the first total number exceeds a first value, the message including the destination Internet Protocol address; receiving alert messages and counting a second total number of requests per destination Internet Protocol address based on the received alert messages; and if the second total number of requests to a destination Internet Protocol address exceeds a second value and the first value of the first total number of requests to the destination Internet Protocol address is exceeded for a device in the local area network, blocking data communication from the device to the wide area network.

According to a further aspect of the method of blocking data communication from devices in a local area network, the blocking data communication comprises blocking outgoing data communication from the device for which the first value is exceeded and to the destination Internet Protocol address for which the second value is exceeded.

According to a further aspect of the method of blocking data communication from devices in a local area network, the blocking data communication comprises blocking outgoing data communication from the device for which the first value is exceeded and blocking incoming data communication to the device for which the first value is exceeded.

According to a further aspect of the method of blocking data communication from devices in a local area network, the first and the second value are factory preset.

According to a further aspect of the method of blocking data communication from devices in a local area network, the first and the second value are remotely configurable parameters.

According to a further aspect of the method of blocking data communication from devices in a local area network, the first and the second value are remotely configurable parameters that are configurable per destination Internet Protocol address.

According to a further aspect of the method of blocking data communication from devices in a local area network, the method further comprises receiving remote configuration commands for setting the first value and the second value.

According to a further aspect of the method of blocking data communication from devices in a local area network, the configuration commands are according to a Customer premises equipment Management Wide area network Management Protocol.

According to a further aspect of the method of blocking data communication from devices in a local area network, the configuration commands are according to a Simple Network Management Protocol.

The present principles also relate to an access point device for connection to a wide area network and for providing a local area network for local area network devices. The access point device comprises a processor, a memory, a first network interface and a second network interface, configured to count a first total number of requests per device and per destination Internet Protocol address in the wide area network; transmit an alert message destined to access points in the wide area network if for a device in the local area network the first total number exceeds a first value, the message including the destination Internet Protocol address; receive alert messages and counting a second total number of requests per destination Internet Protocol address based on the received alert messages; and if the second total number of requests to a destination Internet Protocol address exceeds a second value and the first value of the first total number of requests to the destination Internet Protocol address is exceeded for a device in the local area network, to block data communication from the device to the wide area network.

According to a further aspect of the device for connection to a wide area network and for providing a local area network for local area network devices, the processor, the memory, the first network interface and the second network interface are further configured to block outgoing data communication from the device for which the first value is exceeded and to the destination Internet Protocol address for which the second value is exceeded.

According to a further aspect of the device for connection to a wide area network and for providing a local area network for local area network devices, the processor, the memory, the first network interface and the second network interface are further configured to block outgoing data communication from the device for which the first value is exceeded and blocking incoming data communication to the device for which the first value is exceeded.

According to a further aspect of the device for connection to a wide area network and for providing a local area network for local area network devices, the processor, the memory, the first network interface and the second network interface are further configured to receive remote configuration commands comprising parameter values for setting the first and the second values.

According to a further aspect of the device for connection to a wide area network and for providing a local area network for local area network devices, the processor, the memory, the first network interface and the second network interface are further configured to receive remote configuration commands comprising parameter values per destination Internet Protocol address for setting the first and the second values.

### BRIEF DESCRIPTION OF THE DRAWINGS

More advantages of the present disclosure will appear through the description of particular, non-restricting embodiments. To describe the way the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure. The embodiments will be described with reference to the following drawings in which:
**Figure 1** is a typical subscriber home connected to a service provider.
**Figure 2** is a network infrastructure including several subscribers to a service provider.
**Figure 3** is a network infrastructure illustrating a DDoS attack from loT devices that target a service provider server.
**Figure 4** is a flow chart of a process for management of local request counters that is part of the method of blocking DDoS attacks according to the present principles.
**Figure 5** is a flow chart of a process for management of incoming alert messages that is part of the method of blocking DDoS attacks according to the present principles.
**Figure 6** is a flow chart of a process for monitoring of local LAN devices participating in DDoS attacks that is part of the method of blocking Distributed Denial of Service attacks according to the present principles.
**Figure 7** is a flow chart of an embodiment of a method according to the present principles that unifies the flow charts of figures 4, 5 and 6.
**Figure 8** is an embodiment of a device suitable for implementing embodiments of the method of blocking DDoS attacks from LAN devices.

It should be understood that the drawings are for purposes of illustrating the concepts of the disclosure and are not necessarily the only possible configuration for illustrating the disclosure.

### DETAILED DESCRIPTION

All examples and conditional language recited herein are intended for educational purposes to aid the reader in understanding the disclosure and the concepts contributed by the inventor to furthering the art, and are to be construed as being without limitation to such specifically recited examples and conditions.

In the following, the terms 'gateway' (GW), 'access point' (AP) are used indifferently for meaning the same. In computer networking, an access point is a networking hardware device that allows a network compliant device to connect to a network provided by the access point and to connect to the devices in that network via the access point. Therefore, the present disclosure may apply to other types of access points than gateways, such as mobile devices acting as access points or network routers.

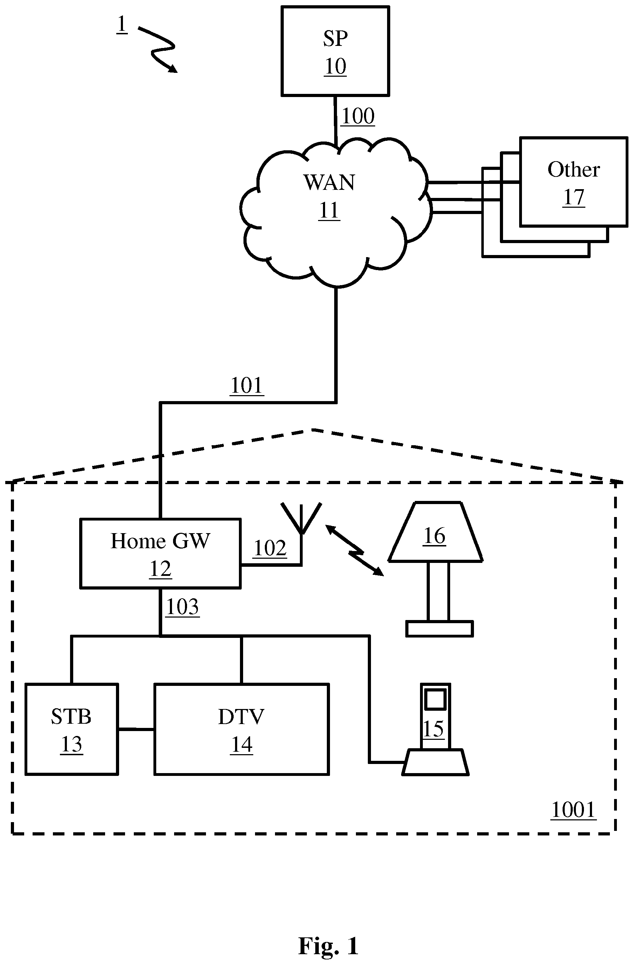

**Figure 1** is a typical subscriber home connected to a service provider. The system **1** includes a Service Provider SP **10,** connected to a Wide Area Network WAN **11** via link **100,** and a subscriber home **1001.** Subscriber home **1001** includes a gateway GW **12.** Gateway **12** provides a wired and wireless Access Point (AP) for home network LAN devices Set Top Box STB **13,** Digital Television DTV **14,** an IP telephone **15,** and a luminaire or lamp **16** loT device. Gateway **12** is provided to the subscriber in the context of a triple-play offer by service provider **10** for combined Internet, telephony and IPTV services. Gateway **12** includes several network interfaces, a first network interface enabling connection **101** with WAN **11,** a second network interface enabling wired connection **103** with LAN devices **13** and **14,** and a third network interface enabling wireless connections **102** with IP telephone **15** and WiFi-controllable luminaire or lamp **16.** The system 1 further comprises a myriad of other Internet servers 17, for providing public or private services (e-commerce, government services, etc.).

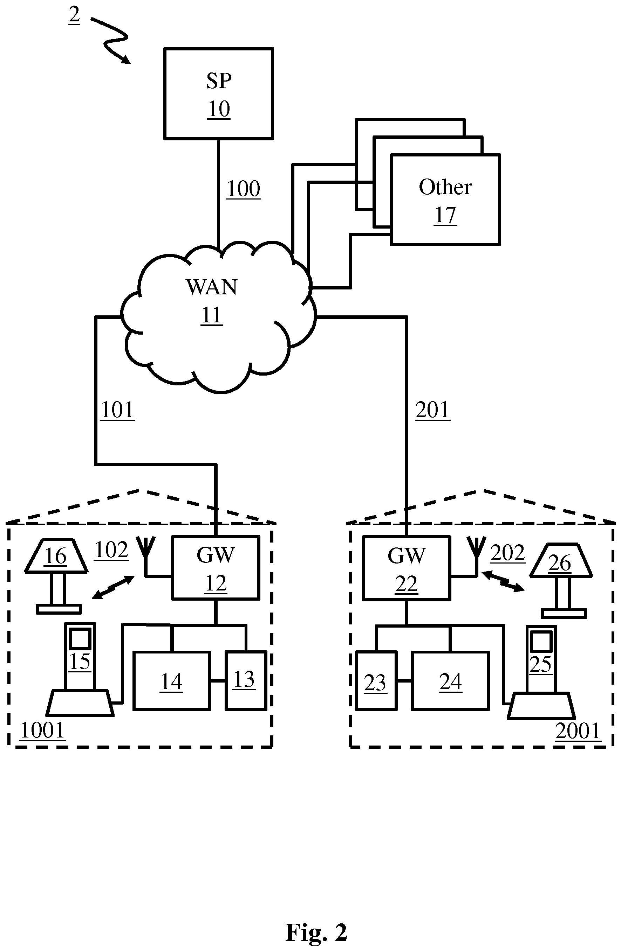

**Figure 2** is a network infrastructure including several subscribers to a service provider. The infrastructure **2** includes a first home **1001** of a first subscriber and a second home **2001** of a second subscriber. Second home **2001** includes a second gateway **22.** The second gateway **22** in the second home **2001** is connected to the WAN **13** via link **201.** The second gateway **22** in the second home **2001** further includes a second wireless network **202.** Second gateway **22** provides for an access point for devices **23** (STB), **24** (IPTV), **25** (IP telephone) and **26** (WiFi controllable lamp). In practice, a service provider has a customer base that can include millions of gateways like gateways **12** and **22,** and millions of set-top boxes like set top boxes **13** and **23.** These gateways and set top boxes are supplied to subscribers to a triple-play service offer originating from the service provider and are therefore managed and controlled by the service provider. Other devices using the LAN supplied by the service provider's home gateways such as the depicted IP telephone **25** and WiFi lamp **26** are not supplied by the service provider and are therefore beyond the service provider's control. These are mass market products and may have serious security flaws such as default passwords e.g., '0000' or '1234', and may not require that the default password is changed during a configuration set up. Other security flaws may exist in the operating system/firmware while awaiting a download of an updated version. These devices thereby form an easy target for infection with malware and by their mere number, once infected, may be used to form a botnet that targets a particular server or number of servers in a DDoS attack. Defending against such attack is difficult since one of the features of the DDoS attack is that there are so many devices participating in the attack and each device only addresses a relatively limited number of requests to the IP address targeted by the attack. It may well be that among the devices transmitting request to the targeted IP address, there are many benign devices not included in the attack. Blocking all devices that access a targeted IP address would therefore be counterproductive as it would achieve the effect desired by the attack, namely rendering the targeted IP address inaccessible. It is therefore desirable to stop DDoS attacks before they gain momentum without blocking access to an attacked IP address for benign devices. A supplementary issue in the battle against DDoS attacks is how to efficiently organize a defense. Implementing a monitoring function on a server that performs a surveillance of requests to a particular IP address or set of addresses to detect and prevent DDoS attacks is a possibility but has important drawbacks. Notably, the monitoring server can be attacked itself and can be rendered inoperable. It is therefore desirable to render the monitoring function less vulnerable. The present principles therefore implement distributed surveillance and selective blocking of devices participating in a DDoS attack.

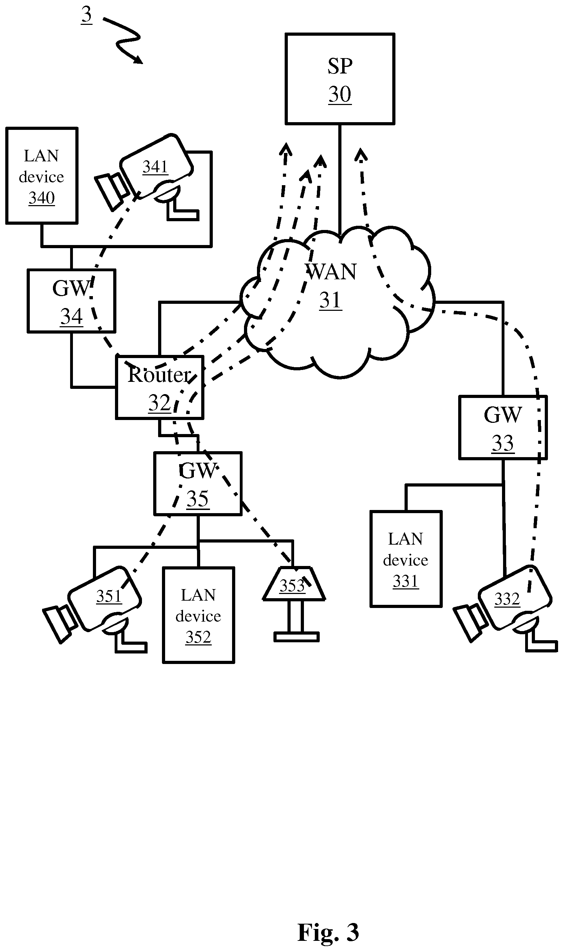

**Figure 3** is a network infrastructure illustrating a DDoS attack from loT devices that target a service provider server. A network infrastructure **3** comprises a service provider server **30,** gateway **33** and router **32** that are connected in a WAN **31.** Gateways **34** and **35** are connected to the WAN **31** via a router **32.** Each of the gateways **33-35** provide a LAN network for LAN devices. Gateway **33** provides a LAN for devices **331** and **332.** Gateway **34** provides a LAN for devices **340** and **341.** Gateway **35** provides a LAN for devices **351-353.** LAN devices **332, 341, 351** and **353** are loT devices that participate in the DDoS attack illustrated with the aid of broken arrows. Device **332** participates in the DDoS attack via gateway **33.** Device **34** participates in the DDoS attack via gateway **34** and router **32.** Devices **351** and **353** participate in the DDoS attack via gateway **35** and router **32.**

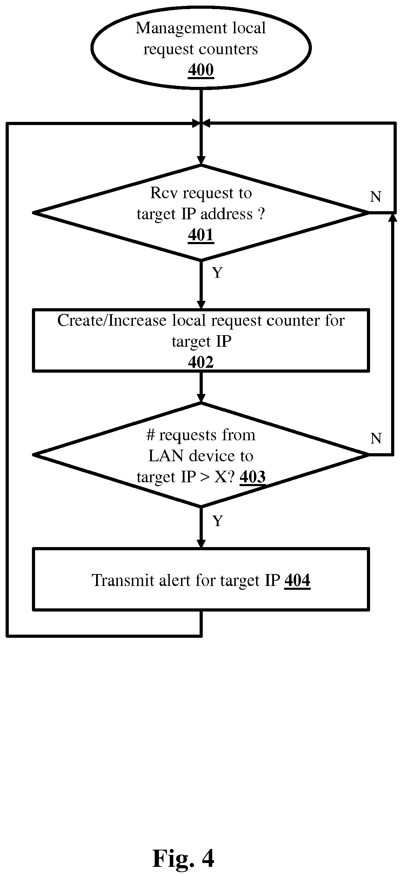

**Figure 4** is a flow chart **400** of a process for management of local request counters that is part of the method of blocking DDoS attacks according to the present principles. The process is for example implemented by a gateway **33** or **35.** The flow chart starts with a decisional block **401** in which it is verified if a LAN device addresses a request to a WAN device. This is verified for example by the gateway through snooping (non-intrusive listening) of the IP data communication between the LAN devices and the WAN by an IP snooper function. If the IP snooper does not detect such data communication, the process loops back to step **401** (**401**-N). If to the contrary the IP snooper detects such data communication (**401**-Y), a local request counter is increased for the target IP WAN address and the MAC address of the LAN device from which the request originates in a step **402.** If a local request counter for the target IP WAN/MAC address does not yet exist, a local request counter is created and set to 1. Then, in a decisional step **403,** it is verified if for any MAC address of a local device / target IP address pair and reading out the local request counter for the MAC address of a local device / target IP address pair, the number of requests to a target IP address exceeds a value X. If the number does not exceed the value X, the process loops back to step **401** (**403**-N). If, however, the number does exceed the value X (**403**-Y), the number of requests to the target IP address is considered as being suspicious in a sense that it might be that the LAN device is participating in a DDoS attack to the target IP address. Therefore, other devices (gateways) are informed of the suspicion by transmitting an alert message on an IP multicast address dedicated to this purpose. The alert message, the targeted IP WAN address, optionally comprises the LAN MAC address of the local LAN device for which the number of requests to a specific target IP WAN address exceeds the value X and optionally comprises the current value of the local request counter. Following this, the process loops back to step **401.** According to a particular embodiment, a sliding window technique is used, so that the local request counters are deleted or reinitialized regularly, for example when a new time slot of the sliding window starts, or only considering requests that are younger than a given time period. The value X is for example a parameter that is factory preset and/or set by a remote management server (e.g., an Auto Configuration Server or ACS) through a remote management command received from a remote management server, e.g., using Customer premises equipment Wan Management Protocol (CWMP - TR069) or Simple Network Management Protocol (SNMP). A gateway may thus transmit a number of alert messages for a same MAC address/target IP address pair during a time slot, for example, if X = 100 (time slot duration is for example 10ms), a gateway transmits a first alert message <target IP WAN address>,[<MAC address>],[<101>], a second alert message <target IP WAN address>,[<MAC address>],[<102>], a third alert message <target IP WAN address>,[<MAC address>],[<103>]. The signs [ ] indicate that the message parameter is optional.

According to a particular embodiment, the MAC address in the alert message is replaced by a derived identifier such as a hash of the MAC address or a salted hash of the MAC address. This avoids information leaks which can be exploited by malicious software.

According to a particular embodiment, the gateway memorizes local request counters in a data structure. Table 1 hereunder is an example data structure for storing local request counters.

**Table 1: data structure for memorizing local request counters**

| **MAC address** | **Target IP WAN addr** | **Local Request counter** |
|---|---|---|
| | | |
| | | |
| | | |

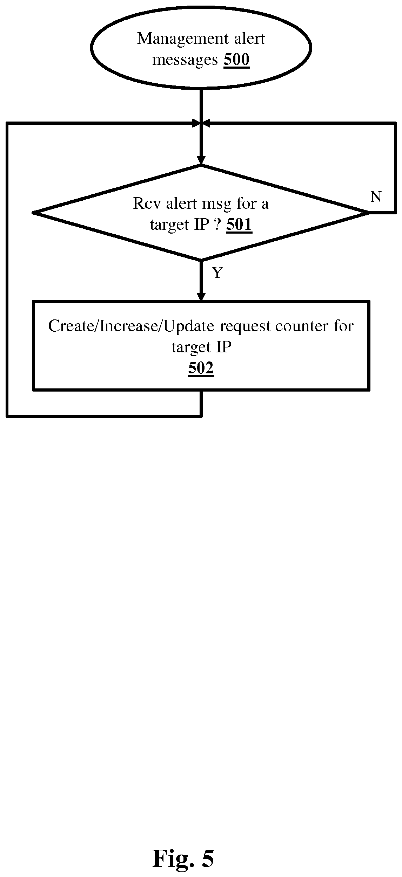

**Figure 5** is a flow chart of a process **500** for management of incoming alert messages that is part of the method of blocking DDoS attacks according to the present principles. The process **500** is for example implemented by gateway **33** or **35.** In a step **501,** it is verified if an alert message is received. If no such message is received (**501-N**), the process loops back to step **501.** If such message is received (**501-Y**), it is verified in step **502** if a request counter exists for the target IP WAN address included in the alert message. If a request counter does not exist, it is created and initialized with the value of the request counter included in the alert message. If a request counter already exists for the target IP WAN address, the request counter value is increased with the value of the request counter included in the alert message or updated with the difference between the value of the request counter included in the alert message and an initial value of the request counter as received in a first alert message for the same MAC address/target IP WAN address pair.

According to a particular embodiment, the gateway may memorize request counters in a data structure. Such data structure can be visualized by table 2 hereunder.

**Table 2: data structure for memorizing request counters**

| **Target IP WAN addr** | **Request counter** |
|---|---|
| | |
| | |
| | |

Using the data structures of tables 1 and 2, it is thus possible to keep track of the number of requests issued by a local LAN device to a target IP WAN address (column 'local request counter' in table 1) and the total number of requests to a target IP address as issued by all devices in all LANs in a network (column 'request counter' in table 2).

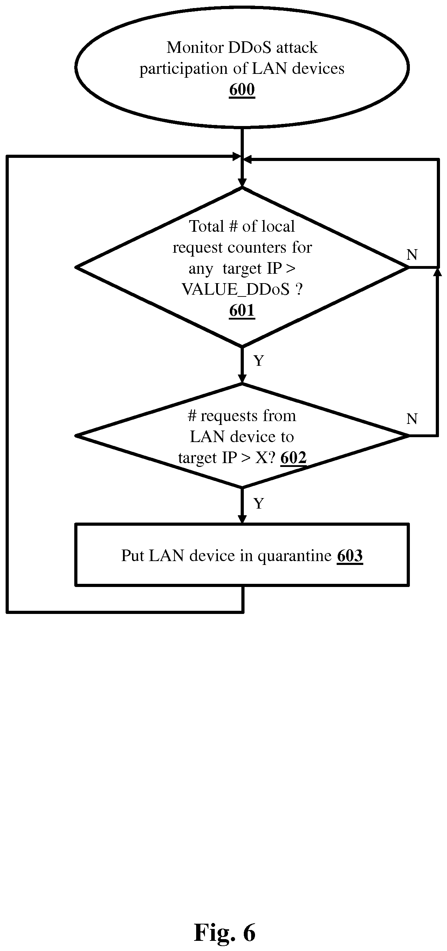

**Figure 6** is a flow chart **600** of a process for monitoring if local LAN devices participate in DDoS attacks. The process is part of the method of blocking Distributed Denial of Service attacks according to the present principles. The process monitors the total number of requests for all target IP WAN addresses memorized. The process uses for example data stored according to table 2. If, in step **601,** for any target IP WAN address a value VALUE_DDOS is not exceeded (**601**-N), the process loops back to step **601.** If, however, for any target IP WAN address the value VALUE_DDOS is exceeded, a DDoS attack is detected (**601**-Y). If this is the case, step **602** is engaged. In step **602,** it is verified if any local LAN device has a total number of requests to the same target IP WAN address that exceeds the previously mentioned value X. This is verified for example using the data structure visualized by table 1. If no such local device is found (**602**-N), the process loops back to step **601.** If such local device is found, the local device is put into quarantine in step **603** and the process loops back to step **601.**

According to a particular embodiment, space-efficient count-min sketch (CM sketch) like algorithm is used for the first and/or the second data structure.

As mentioned previously for X, VALUE_DDOS is for example a parameter that is factory preset and/or set by a remote management server (e.g., ACS) through a remote management command received from a remote management server, e.g., using CWMP or SNMP.

X and VALUE_DDOS can have any value while VALUE_DDOS is superior to X. In practice, the values of these parameters depend on the duration of the time slots. The value of X is a tradeoff between a need to detect DDoS attacks that issue relatively few requests to an attacked IP address per participating device and network bandwidth required for transmission of alert messages when X is exceeded. The value of X is a tradeoff between proactive use of the mechanism and thus increasing a probability of creating false alerts and thereby unjustified putting devices in quarantine and relaxed use of the mechanism and thus increasing the probability that real attacks remain unnoticed and are not reacted upon.

According to a particular embodiment, VALUE_DDOS and/or X are related to target (destination) IP addresses and thus configurable per destination IP address. This way, it is possible to specify these parameters per target IP address, which allows a fine adjustment. For example, VALUE_DDOS may be adjusted to a value equal or higher than a maximum number of requests that a particular server or a particular group of servers with a given IP address are expected to receive per time slot (time entity), and thus a higher number of requests or significant higher number of requests can be considered as representing a DDoS attack. Usage statistics may show that under normal circumstances, the number of requests to a server or group of servers per time entity is high during daytime, while being low during nighttime, vary during office hours, holiday periods etc. According to a particular embodiment, these parameters are adjusted frequently, for example several times a day or several times a week) based on usage statistics of the number of requests received by a particular server or group of servers per time entity, so that a higher or significantly higher number of requests received during the time entity will result in detection of a DDoS attack.

According to a particular embodiment, a warning message is transmitted to the device that is detected as participating in a DDoS attack or to the administrator or the user of the device that is detected as participating in a DDoS attack or the administrator of the local area network to which the device that is detected as participating in a DDoS attack is connected so that measures can be taken such as anti-virus scanning and removing of malicious software from the device before readmission to the local area network.

According to a particular embodiment, the putting in quarantine of a device detected as participating in a DDoS attack implies preventing any outgoing and incoming data traffic from/to the LAN device.

According to a particular embodiment, the putting in quarantine of a device detected as participating in a DDoS attack implies preventing any outgoing requests from the LAN device to the specific IP WAN address or addresses for which a DDoS attack is detected.

For reasons of clarity, figures 4, 5 and 6 depict separate processes. However, these processes may be joined in a single diagram representing an embodiment of the method according to the present principles.

Through the above-mentioned mechanism of transmitting alert messages, the request counters are replicated among the gateways in the network.

According to a particular embodiment of the method of blocking Distributed Denial of Service attacks, the transmitting of alert messages is performed via IP multicast. Gateways that wish to receive alert messages can subscribe to the specific IP multicast alert message address to receive alert messages via the Internet Group Multicast Protocol (IGMP; IGMP join). This is a preferred embodiment if IP multicast in the network by gateways is allowed/enabled since network equipment in the core network of the service provider are already IP multicast enabled for broadcasting of, for example, IPTV streams from the service provider to the service provider's clients in the network.

However, the service provider may prohibit the use of IP multicasting by gateway equipment and LAN devices for reason of protection of its distribution network. Therefore, according to a particular embodiment, an application-layer technique for transmitting the alert messages is used such as Lightweight Probabilistic Broadcast (LPB). LPB mimics epidemic propagation: an alert message is transmitted via IP unicast to a randomly selected (small) number of other gateways, using gateway IP address of these gateways and specific application port number. The gateways that receive an alert message, in turn does exactly the same: they randomly select a set of gateways and forward the received alert message to the randomly selected set.

According to a particular embodiment of the method of blocking Distributed Denial of Service attacks, a service provider maintains an overlay communication infrastructure between gateways. The gateways interrogate the service provider to receive a list of gateway IP addresses of their neighbors in the overlay to which they are supposed to forward alert messages if any. The forwarding process of the alert messages is thus deterministic, and if the overlay is constructed to cover all gateways in a reliable manner, alert messages will also be reliably distributed. Examples of overlays are redundant trees, spanners, or grids. The overlay can be maintained in a central fashion (a service provider server is in charge to inform each gateway about its neighboring gateways in the overlay) or in a distributed fashion between the gateways only (with for instance the use of a protocol such as Chord).

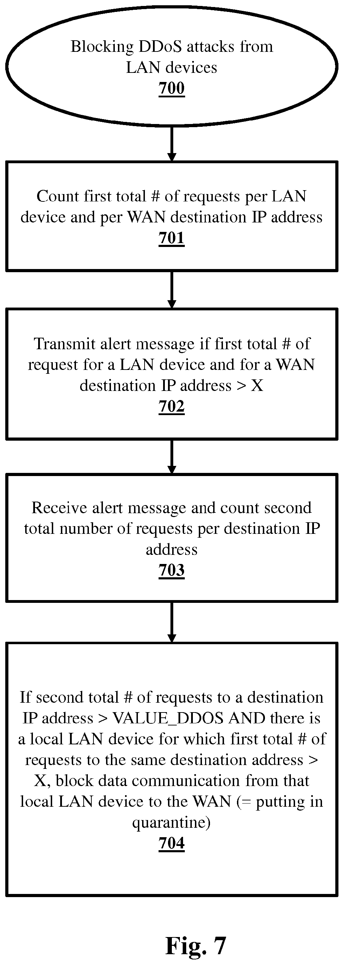

Figure 7 is a flow chart of an embodiment of a method according to the present principles that unifies the flow charts of figures 4, 5 and 6. The method **700** of blocking Distributed Denial of Service attacks from devices e.g., **13-16, 23-26, 331-332, 340-341,** and **351-353,** in a local area network is implemented by a gateway/access point/router device e.g., **12, 22,** and **32-35,** connected to a wide area network e.g., **11** and **31,** and providing the local area network to the LAN devices. The method includes a step of counting **701** a first total number of requests per device and per destination Internet Protocol address in the wide area network; a step of transmitting **702** an alert message destined to access points in the wide area network if for a device in the local area network the first total number exceeds a first value, the message including the destination Internet Protocol address and optionally including the first total number of requests and optionally a MAC address; a step of receiving **703** alert messages and counting a second total number of requests per destination Internet Protocol address based on the received alert messages; and a step of, if the second total number of requests to a destination Internet Protocol address exceeds a second value and the first value of the first total number of requests to the destination Internet Protocol address is exceeded for a device in the local area network, blocking **704** data communication from the device to the wide area network (= putting the device in quarantine).

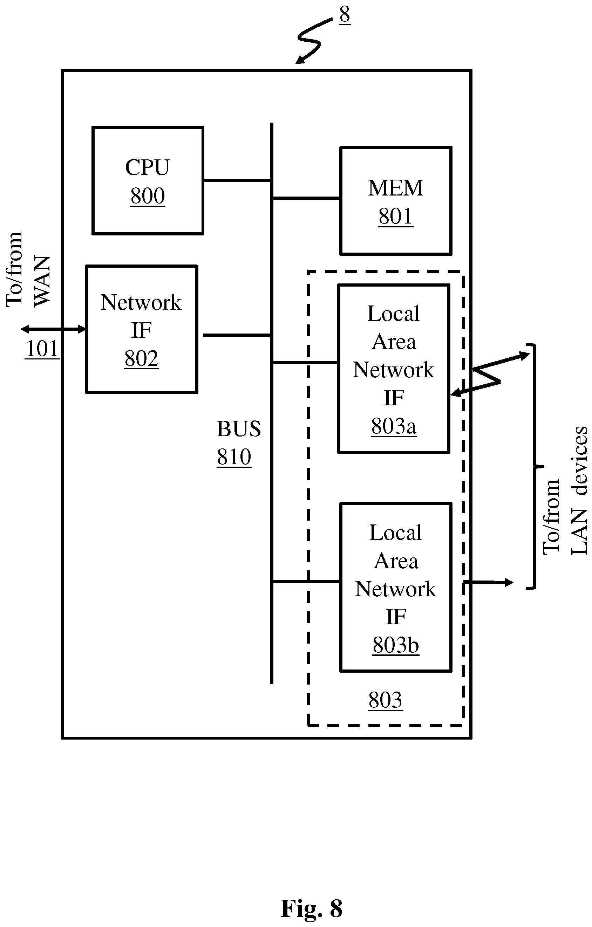

**Figure 8** is an embodiment of a device suitable for implementing embodiments of the method of blocking DDoS attacks from LAN devices according to the present principles. The device **8** corresponds for example to any one of the gateways/access points/router devices **12, 22,** and **32-35.** The device **8** comprises a processor **800** or Central Processing Unit (CPU), a memory **801,** a network interface **802** for connection to a WAN, and a LAN interface **803** including a wireless LAN interface **803a** and a wired LAN interface **803b,** all of which are connected to an internal communication bus **810.** Memory **801** is used to store the data structures as depicted in table 1 and/or table 2, although these data structures may also be implemented in a distributed form over a set of devices without diverting from the present principles. Memory **801** is further used to store the first and second values, although these may also be stored in the network (e.g., in cloud storage) without diverting from the present principles. Memory **801** may further be used to store instructions for processor **800,** that, when executed, implement an embodiment of the method according to the present principles. Central processor **800** counts the first and second total number of requests and instructs if required network interface **802** to transmit an alert message. Alert messages from other devices are also received via network interface **802.** Central processor **800** may further take a decision to put a device in quarantine if conditions apply that are described with the aid of figure 7 step **704.**

It is to be appreciated that some elements in the drawings may not be used or be necessary in all embodiments. Some operations may be executed in parallel. Embodiments other than those illustrated and/or described are possible. For example, a device implementing the present principles may include a mix of hard- and software.

Thus, for example, it is to be appreciated that the diagrams presented herein represent conceptual views of illustrative system components and/or circuitry embodying the principles of the present disclosure. Similarly, it is to be appreciated that any flow charts, flow diagrams, state transition diagrams, pseudo code, and the like represent various processes which may be substantially represented in computer readable storage media and so executed by a computer or processor, whether such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. Some or all aspects of the storage medium may be remotely located (e.g., in the 'cloud'). It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method (700) of blocking data communication from devices (13-16, 23-26, 331-332, 340-341, 351-353) in a local area network, wherein said method is implemented by an access point (12, 22, 32-35) connected to a wide area network (11, 31) and providing said local area network to said devices, said method comprising:
counting (701) a first total number of requests per device and per destination Internet Protocol address in said wide area network;
the method being **characterised in that** it comprises:
transmitting (702) an alert message destined to access points in said wide area network if for a device in said local area network said first total number exceeds a first value, the message comprising said destination Internet Protocol address;
receiving (703) alert messages and counting a second total number of requests per destination Internet Protocol address based on said received alert messages;
if said second total number of requests to a destination Internet Protocol address exceeds a second value and said first value of said first total number of requests to said destination Internet Protocol address is exceeded for a device in said local area network, blocking (704) data communication from said device to said wide area network.

2. The method according to claim 1, wherein said blocking data communication comprises blocking outgoing data communication from said device for which said first value is exceeded and to said destination Internet Protocol address for which said second value is exceeded.

3. The method according to claim 1, wherein said blocking data communication comprises blocking outgoing data communication from said device for which said first value is exceeded and blocking incoming data communication to said device for which said first value is exceeded.

4. The method according to any of claims 1 to 3, wherein said first and said second value are factory preset.

5. The method according to any of claims 1 to 3, wherein said first and said second value are remotely configurable parameters.

6. The method according to claim 5, wherein said first and said second value are remotely configurable parameters that are configurable per destination Internet Protocol address.

7. The method according to claim 6, further comprising receiving remote configuration commands for setting said first value and said second value.

8. The method according to claim 7, wherein said configuration commands are according to a Customer premises equipment Management Wide area network Management Protocol.

9. The method according to claim 7, wherein said configuration commands are according to a Simple Network Management Protocol.

10. An access point device (8) for connection to a wide area network and for providing a local area network for local area network devices, the access point device comprising a processor (800), a memory (801), a first network interface (803) and a second network interface (802), configured to:
count a first total number of requests per device and per destination Internet Protocol address in said wide area network;
the access point device being **characterised in that** it is configured to: transmit an alert message destined to access points in said wide area network if for a device in said local area network said first total number exceeds a first value, the message comprising said destination Internet Protocol address;
receive alert messages and counting a second total number of requests per destination Internet Protocol address based on said received alert messages; and
if said second total number of requests to a destination Internet Protocol address exceeds a second value and said first value of said first total number of requests to said destination Internet Protocol address is exceeded for a device in said local area network, block data communication from said device to said wide area network.

11. The access point device according to claim 10, wherein said processor, said memory, said first network interface and said second network interface are further configured to block outgoing data communication from said device for which said first value is exceeded and to said destination Internet Protocol address for which said second value is exceeded.

12. The access point device according to claim 10, wherein said processor, said memory, said first network interface and said second network interface are further configured to block outgoing data communication from said device for which said first value is exceeded and blocking incoming data communication to said device for which said first value is exceeded.

13. The access point device according to any of claims 10 to 12, wherein said processor, said memory, said first network interface and said second network interface are further configured to receive remote configuration commands comprising parameter values for setting said first and said second values.

14. The access point device according to claim 13, wherein said processor, said memory, said first network interface and said second network interface are further configured to receive remote configuration commands comprising parameter values per destination Internet Protocol address for setting said first and said second values.

## Patentansprüche

1. Verfahren (700) zum Sperren der Datenkommunikation von Vorrichtungen (13-16, 23-26, 331-332, 340-341, 351-353) in einem lokalen Netz, wobei das Verfahren durch einen Zugangspunkt (12, 22, 32-35) implementiert wird, der mit einem Weitverkehrsnetz (11, 31) verbunden ist und der das lokale Netz zu den Vorrichtungen bereitstellt, wobei das Verfahren umfasst:
Zählen (701) einer ersten Gesamtzahl von Anforderungen pro Vorrichtung und pro Ziel-Internetprotokolladresse in dem Weitverkehrsnetz;
wobei das Verfahren **dadurch gekennzeichnet ist, dass** es umfasst:
Senden (702) einer Warnmeldung, die für Zugangspunkte in dem Weitverkehrsnetz bestimmt ist, falls die erste Gesamtzahl für eine Vorrichtung in dem lokalen Netz einen ersten Wert überschreitet, wobei die Meldung die Ziel-Internetprotokolladresse umfasst;
Empfangen (703) von Warnmeldungen und Zählen einer zweiten Gesamtzahl von Anforderungen pro Ziel-Internetprotokolladresse auf der Grundlage der empfangenen Warnmeldungen;
Sperren (704) der Datenkommunikation von der Vorrichtung zu dem Weitverkehrsnetz, falls die zweite Gesamtzahl von Anforderungen zu einer Ziel-Internetprotokolladresse einen zweiten Wert überschreitet und falls der erste Wert der ersten Gesamtzahl von Anforderungen zu der Ziel-Internetprotokolladresse für eine Vorrichtung in dem lokalen Netz überschritten ist.

2. Verfahren nach Anspruch 1, wobei das Sperren der Datenkommunikation das Sperren abgehender Datenkommunikation von der Vorrichtung, für die der erste Wert überschritten ist, und zu der Ziel-Internetprotokolladresse, für die der zweite Wert überschritten ist, umfasst.

3. Verfahren nach Anspruch 1, wobei das Sperren der Datenkommunikation das Sperren abgehender Datenkommunikation von der Vorrichtung, für die der erste Wert überschritten ist, und das Sperren ankommender Datenkommunikation zu der Vorrichtung, für die der erste Wert überschritten ist, umfasst.

4. Verfahren nach einem der Ansprüche 1 bis 3, wobei der erste und der zweite Wert werkseitige Einstellungen sind.

5. Verfahren nach einem der Ansprüche 1 bis 3, wobei der erste und der zweite Wert fern konfigurierbare Parameter sind.

6. Verfahren nach Anspruch 5, wobei der erste und der zweite Wert fern konfigurierbare Parameter sind, die pro Ziel-Internetprotokolladresse konfigurierbar sind.

7. Verfahren nach Anspruch 6, das ferner das Empfangen von Fernkonfigurationsbefehlen zum Einstellen des ersten Werts und des zweiten Werts umfasst.

8. Verfahren nach Anspruch 7, wobei die Konfigurationsbefehle gemäß einem Customer Premises Equipment Management Wide Area Network Management Protocol sind.

9. Verfahren nach Anspruch 7, wobei die Konfigurationsbefehle gemäß einem Simple Network Management Protocol sind.

10. Zugangspunktvorrichtung (8) für die Verbindung mit einem Weitverkehrsnetz und zum Bereitstellen eines lokalen Netzes für Vorrichtungen des lokalen Netzes, wobei die Zugangspunktvorrichtung einen Prozessor (800), einen Speicher (801), eine erste Netzschnittstelle (803) und eine zweite Netzschnittstelle (802) umfasst, wobei die Zugangspunktvorrichtung konfiguriert ist zum:
Zählen einer ersten Gesamtzahl von Anforderung pro Vorrichtung und pro Ziel-Internetprotokolladresse in dem Weitverkehrsnetz;
wobei die Zugangspunktvorrichtung **dadurch gekennzeichnet ist, dass** sie konfiguriert ist zum:
Senden einer Warnmeldung, die für Zugangspunkte in dem Weitverkehrsnetz bestimmt ist, falls die erste Gesamtzahl für eine Vorrichtung in dem lokalen Netz einen ersten Wert überschreitet, wobei die Meldung die Ziel-Internetprotokolladresse umfasst;
Empfangen von Warnmeldungen und Zählen einer zweiten Gesamtzahl von Anforderungen pro Ziel-Internetprotokolladresse auf der Grundlage der empfangenen Warnmeldungen; und
Sperren der Datenkommunikation von der Vorrichtung zu dem Weitverkehrsnetz, falls die zweite Gesamtzahl von Anforderungen zu einer Ziel-Internetprotokolladresse einen zweiten Wert überschreitet und falls der erste Wert der ersten Gesamtzahl von Anforderungen zu der Ziel-Internetprotokolladresse für eine Vorrichtung in dem lokalen Netz überschritten ist.

11. Zugangspunktvorrichtung nach Anspruch 10, wobei der Prozessor, der Speicher, die erste Netzschnittstelle und die zweite Netzschnittstelle ferner dafür konfiguriert sind, abgehende Datenkommunikation von der Vorrichtung, für die der erste Wert überschritten ist, und zu der Ziel-Internetprotokolladresse, für die der zweite Wert überschritten ist, zu sperren.

12. Zugangspunktvorrichtung nach Anspruch 10, wobei der Prozessor, der Speicher, die erste Netzschnittstelle und die zweite Netzschnittstelle ferner dafür konfiguriert sind, abgehende Datenkommunikation von der Vorrichtung, für die der erste Wert überschritten ist, zu sperren und ankommende Datenkommunikation zu der Vorrichtung, für die der erste Wert überschritten ist, zu sperren.

13. Zugangspunktvorrichtung nach einem der Ansprüche 10 bis 12, wobei der Prozessor, der Speicher, die erste Netzschnittstelle und die zweite Netzschnittstelle ferner dafür konfiguriert sind, Fernkonfigurationsbefehle zu empfangen, die Parameterwerte zum Einstellen des ersten und des zweiten Werts umfassen.

14. Zugangspunktvorrichtung nach Anspruch 13, wobei der Prozessor, der Speicher, die erste Netzschnittstelle und die zweite Netzschnittstelle ferner dafür konfiguriert sind, Fernkonfigurationsbefehle zu empfangen, die Parameterwerte pro Ziel-Internetprotokolladresse umfassen, um den ersten und den zweiten Wert einzustellen.

## Revendications

1. Procédé (700) de blocage de la communication de données à partir de dispositifs (13-16, 23-26, 331-332, 340-341, 351-353) sur un réseau local, dans lequel ledit procédé est mis en œuvre par un point d'accès (12, 22, 32-35) connecté à un réseau étendu (11, 31) et fournissant ledit réseau local auxdits dispositifs, ledit procédé comprenant :
le comptage (701) d'un premier nombre total de requêtes par dispositif et par adresse Internet Protocol de destination sur ledit réseau étendu ;
le procédé étant **caractérisé en ce qu'**il comprend :
la transmission (702) d'un message d'alerte destiné à des points d'accès sur ledit réseau étendu si, pour un dispositif sur ledit réseau local, ledit premier nombre total dépasse une première valeur, le message comprenant ladite adresse Internet Protocol de destination ;
la réception (703) de messages d'alerte et le comptage d'un deuxième nombre total de requêtes par adresse Internet Protocol de destination en fonction desdits messages d'alerte reçus ;
si ledit deuxième nombre total de requêtes vers une adresse Internet Protocol de destination dépasse une deuxième valeur et que ladite première valeur dudit premier nombre total de requêtes vers ladite adresse Internet Protocol de destination est dépassée pour un dispositif sur ledit réseau local, le blocage (704) de la communication de données à partir dudit dispositif vers ledit réseau étendu.

2. Procédé selon la revendication 1, dans lequel ledit blocage de la communication de données comprend le blocage de la communication de données sortante à partir dudit dispositif pour lequel ladite première valeur est dépassée et vers ladite adresse Internet Protocol de destination pour laquelle ladite deuxième valeur est dépassée.

3. Procédé selon la revendication 1, dans lequel ledit blocage de la communication de données comprend le blocage de la communication de données sortante à partir dudit dispositif pour lequel ladite première valeur est dépassée et le blocage de la communication de données entrante vers ledit dispositif pour lequel ladite première valeur est dépassée.

4. Procédé selon l'une quelconque des revendications 1 à 3, dans lequel ladite première et ladite deuxième valeurs sont prédéfinies en usine.

5. Procédé selon l'une quelconque des revendications 1 à 3, dans lequel ladite première et ladite deuxième valeurs sont des paramètres configurables à distance.

6. Procédé selon la revendication 5, dans lequel ladite première et ladite deuxième valeurs sont des paramètres configurables à distance qui sont configurables par adresse Internet Protocol de destination.

7. Procédé selon la revendication 6, comprenant en outre la réception de commandes de configuration à distance pour définir ladite première valeur et ladite deuxième valeur.

8. Procédé selon la revendication 7, dans lequel lesdites commandes de configuration sont basées sur un protocole de gestion de réseau étendu d'équipement de site client.

9. Procédé selon la revendication 7, dans lequel lesdites commandes de configuration sont basées sur un protocole de gestion réseau simple.

10. Dispositif de point d'accès (8) pour la connexion à un réseau étendu et pour la fourniture d'un réseau local pour les dispositifs de réseau local, le dispositif de point d'accès comprenant un processeur (800), une mémoire (801), une première interface réseau (803) et une deuxième interface réseau (802), configurés pour :
compter un premier nombre total de requêtes par dispositif et par adresse Internet Protocol de destination sur ledit réseau étendu ;
le dispositif de point d'accès étant **caractérisé en ce qu'**il est configuré pour :
transmettre un message d'alerte destiné à des points d'accès sur ledit réseau étendu si, pour un dispositif sur ledit réseau local, ledit premier nombre total dépasse une première valeur, le message comprenant ladite adresse Internet Protocol de destination ;
recevoir des messages d'alerte et compter un deuxième nombre total de requêtes par adresse Internet Protocol de destination en fonction desdits messages d'alerte reçus ; et
si ledit deuxième nombre total de requêtes vers une adresse Internet Protocol de destination dépasse une deuxième valeur et que ladite première valeur dudit premier nombre total de requêtes vers ladite adresse Internet Protocol de destination est dépassée pour un dispositif sur ledit réseau local, bloquer la communication de données à partir dudit dispositif vers ledit réseau étendu.

11. Dispositif de point d'accès selon la revendication 10, dans lequel ledit processeur, ladite mémoire, ladite première interface réseau et ladite deuxième interface réseau sont en outre configurés pour bloquer la communication de données sortante à partir dudit dispositif pour lequel ladite première valeur est dépassée et vers ladite adresse Internet Protocol de destination pour laquelle ladite deuxième valeur est dépassée.

12. Dispositif de point d'accès selon la revendication 10, dans lequel ledit processeur, ladite mémoire, ladite première interface réseau et ladite deuxième interface réseau sont en outre configurés pour bloquer la communication de données sortante à partir dudit dispositif pour lequel ladite première valeur est dépassée et bloquer la communication de données entrante vers ledit dispositif pour lequel ladite première valeur est dépassée.

13. Dispositif de point d'accès selon l'une quelconque des revendications 10 à 12, dans lequel ledit processeur, ladite mémoire, ladite première interface réseau et ladite deuxième interface réseau sont en outre configurés pour recevoir des commandes de configuration à distance comprenant des valeurs de paramètre pour définir ladite première et ladite deuxième valeurs.

14. Dispositif de point d'accès selon la revendication 13, dans lequel ledit processeur, ladite mémoire, ladite première interface réseau et ladite deuxième interface réseau sont en outre configurés pour recevoir des commandes de configuration à distance comprenant des valeurs de paramètre par adresse Internet Protocol de destination pour définir ladite première et ladite deuxième valeurs.
